# EUROPEAN PATENT SPECIFICATION

(11) **EP 2 558 019 B1**
(45) Date of publication and mention of the grant of the patent: **28.03.2018**
(21) Application number: 11720187.1
(22) Date of filing: 13.04.2011
(51) Int. Cl.: A61C 11/00

(54) **DEVICE FOR DENTAL PROSTHESIS**
VORRICHTUNG FÜR EINE ZAHNPROTHESE
DISPOSITIF POUR PROTHÈSE DENTAIRE

(30) Priority: 14.04.2010 IT VR20100071
(43) Date of publication of application: 20.02.2013
(73) Proprietor: Montefusco, Riccardo, 36061 Bassano Del Grappa (VI) (IT)
(72) Inventor: Montefusco, Riccardo, 36061 Bassano Del Grappa (VI) (IT)
(74) Representative: Citron, Massimiliano
(86) International application number: PCT/IB2011/051592
(87) International publication number: WO 2011/128853

(56) References cited:
- US-A- 2 748 481
- US-A- 3 224 095
- US-A- 5 154 608

## Description

The present invention relates to a device for dental prostheses, in particular an instrument for achieving parallelism between the bipupillar line and the occlusal plane.

The use of the articulator in fitting dental prostheses so as to keep the casts of the two dental arches in a suitable position, such as for example in US 5.176.515 and US 6.386.868 is known.

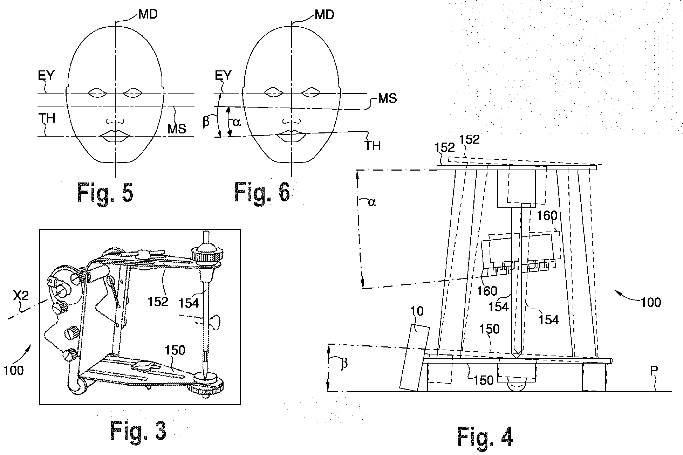

An articulator 100 (see Figures 3 and 4 below) is generally formed of a fixed base 150 to which an oscillating support 152 is hinged at a certain distance along an axis X2 which is adjustable in the space by means of known adjustment means. A positioning rod 154 completes control of the position.

The hinge along the axis X2 simulates the complex biomechanics of the mandibular articulation. The two casts of the dental arches, of which one indicated by reference numeral 160, are fixed between the support 152 and the base 150.

With the articulator various adjustments are possible to reproduce the movement between the two arches. Essentially the articulator is also used in combination with a facebow or transferbow for the correct stereometric measurement of the maxillary or occlusal plane. Figure 5 shows an ideal face, symmetric in relation to a vertical median plane MD, where the axis (or plane) of the mandibular articulation MS, the bipupillar line EY and the occlusal plane TH are parallel to each other. Since perfect facial geometry is rare to find in nature, the facebow is used to position the maxillary plane and establish the angle 0°<α<90° between the MS plane and the TH plane measured from the patient in the dental clinic. The data is then transferred to the dental technician's lab and reproduced on the articulator, on which the prosthetic work is performed. Clearly the final purpose is to produce a dental prosthesis which respects mandibular biomechanics and aesthetics as far as possible. See Figure 4 which uses a continuous line to show the articulator 100 while it reproduces and maintains the angle between the support 152 and the cast 160. In actual fact the inclination of the TH plane in the direction ear-nose is also reproduced on the articulator but we will overlook this aspect here and below inasmuch as not of interest.

In the book "Principles of Aesthetic Integration" by Claude R. Rufenacht, and in other works, the importance of the dentist's focus on strictly aesthetic aspects is emphasised. Basic parameters of attractiveness indicate that for a smile to be attractive it should, among other things, have an incisal plane (roughly the occlusal plane TH) parallel to the bipupillar line EY. Everyone diverges from the ideal parameters of fig. 5, resembling fig. 6, where the positions of the planes EY, MS and TH are not parallel to each other, and in this case not only is there a measurable angle 0°<α<90° between the plane MS and the plane TH, but also a measurable angle 0°<β<90° between the plane EY and the plane TH responsible for the attractiveness of the smile.

The articulator is designed to simulate the angle α in the laboratory but there is no articulator which simulates the angle β. In practice, the angle β is measured from the patient in the clinic using the facebow and then the dental technician laterally inclines the entire articulator by the same angle β using improvised or artificially added means such as for example plasticine placed by trial and error under the base 150.

Clearly, this and other rough systems are inaccurate, laborious and inconvenient. An accurate, versatile, reliable and economical system is therefore required.

US 5 154 608 refers to an apparatus for mandibular prothesis comprising a mandibular part, essentially in the form of a stand, provided with feet of adjustable height. The invention is defined by claim 1.

The main object of the invention is to make a device for modelling dental prostheses which makes it possible to transfer the aesthetic information contained in the angle β to an articulator in a simple and precise manner.

Another object is to make a universal device applicable to any articulator.

Such objects are achieved by a device as defined in the appended claims.

The invention also relates to an articulator comprising means for inclining one side of the entire articulator in an adjustable manner in relation to a support plane so as to incline the models of prostheses insertable in the articulator to correct non-parallelism between the occlusal plane and the bipupillar line.

The invention also refers to an articulator accessory, separate from the articulator and able to be combined with it to lend the articulator new functions.

Further characteristics and advantages of the invention will be more clearly evident from the description of an embodiment according to the invention, together with the appended drawings wherein:
figure 1 shows a three-dimensional view from behind of a bow;
figure 2 shows a three-dimensional view from the front of the bow in fig. 1;
figure 3 shows a three-dimensional view of a known articulator;
figure 4 shows a schematic front view of the articulator in fig. 3;
figure 5 schematically shows an ideal face and some reference planes;
figure 6 schematically shows a real face and some reference planes;
figure 7 schematically shows in perspective and in an exploded view a form of an inclinable support accessory for articulator;
figure 8 shows a plan view of figure 7;
figure 9 shows figure 7 in cross-section according to the plane XII-XII;
figure 10 shows figure 7 in cross-section according to the plane XIII-XIII.

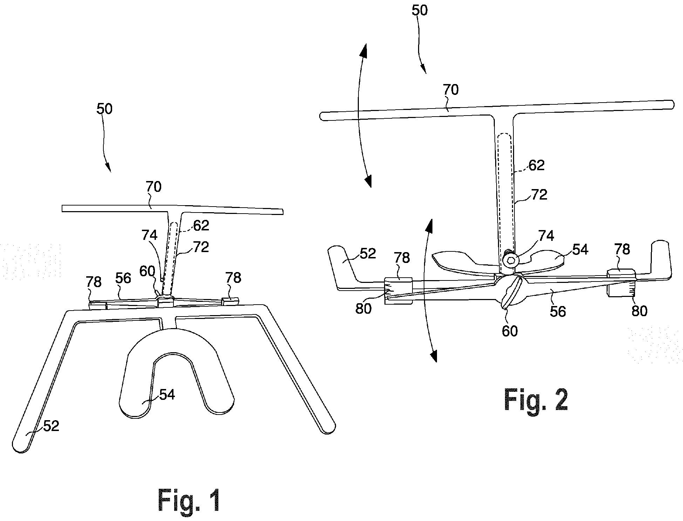

A transfer bow 50 for accurately reproducing the angle β on the articulator is shown in figures 1 and 2. It is formed of a bow 52 to which a fork 54 is attached, above which some wax is placed which, heated and inserted in the patient's mouth, forms the cast of the teeth. A rocker arm 56 with a perpendicular pin 62 (shown by the dotted line) above which a sleeve 72 of a T-shaped reference 70 for the bi-pupillar plane is inserted telescopically, is attached to the bow 52 so as to swivel. A screwing key 60 is used to tighten the rocker arm 56 to the bow 52 or to make it oscillating in relation to it. A screw 74 can be screwed into the sleeve 72 to block the sleeve 72 in position on the pin 62. Two graduated blocks 78 with a scale consisting of notches 80 are present on the bow 52 near the ends of the rocker arm 56.

When the fork 54 is clenched in the patient's mouth, the key 60 is loosened and the benchmark 70 aligned with the bipupillar plane of the patient, if necessary the vertical position of the benchmark 70 being regulated in height on the pin 62. Once the relative positions of the fork 54 and the benchmark 70 have been fixed by tightening the screw 74 and the key 60, it is sufficient to read the scale of the blocks 78 indicated by the tip or wire of the rocker arm 56 (e.g. counting the notches 80). The value measured is an index of the inclination between the fork 54 and the benchmark 70, that is, in conclusion, of the angle β.

The same inclination is then reproduced on the articulator, inclining the whole by the same angle β.

By so doing the entire articulator can be inclined by the same angle as that formed by the lying-position of the plane of the fork 54 and the bipupillar plane.

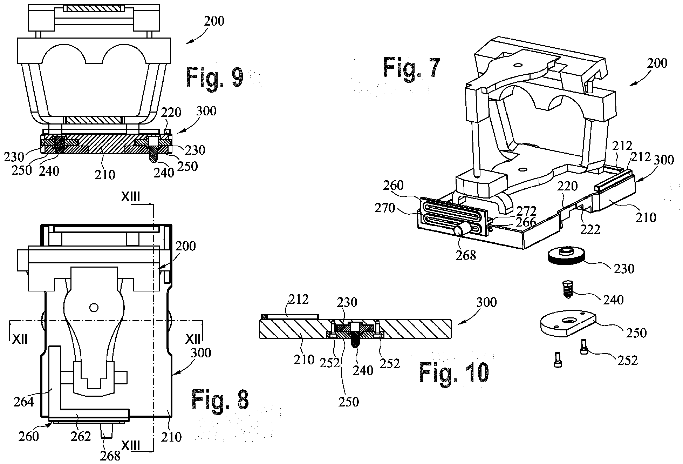

Figure 7 shows an articulator 200 placed on top of an accessory 300 adapted for inclining it laterally.

The accessory 300 comprises a table or flat base plate 210 on which the articulator may be placed. The table 210 comprises raised edges 212, e.g. positioned so as to form a U, around nearly an edge of the base 210 acting so as to provide an abutment for the base of the articulator 200 and keep it in position. The edges 212 may be fixed or be adjustable in position, e.g. inserting pins in predefined holes on the base 210. Other positioning and/or blocking means between the back of the articulator 200 and the base 210 such as, for example, clamps, Velcro®, shaped male-female couplings etc., may also be used.

Positioning and/or blocking means are also present between the front of the articulator 200 and the base 210. As well as, for example, clamps, Velcro®, shaped male-female couplings etc., an abutment 260 adjustable in position may also be used. The abutment 260 is for example L-shaped, with two segments 262, 264 at right angles, so as to be able to touch two sides of the articulator base 200. The abutment 260 has a horizontal slit 270 in which there is inserted a pin 268 that can be screwed and tightened in one or more aligned holes 266 present on the edge of the base 210.The abutment 260 has a horizontal lip 272 facing towards the articulator 200 by which it rests on it.

By loosening the pin 268 the abutment 260 can be shifted along the front edge of the base 210, and once the desired position has been reached, the pin 268 is tightened by screwing to fix the position of the abutment 260 on the base 210.

One or each of the two sides of the base 210 has a small recess 220 in which a cavity is made to house rotatably a notched wheel 230, rotatable with a finger, so as to turn. The accessory 300 could however only have one wheel, so that we will describe only one side, but with two it enables inclination on its sides without turning the articulator by 180°.

The wheel 230 has a polygonal or, in any case, non-circular hole in its centre, which a complementarily-shaped head of a screw 240 is inserted in so as to slide. A plate 250 is attached to the bottom of the table 210 by two screws 252 and keeps the wheel 230 trapped in the cavity 222 but free to rotate. The plate 250 has a hole with thread, corresponding to that of the screw 240 which traverses it in the latter hole.

The accessory 300 is used as follows. The articulator 300 is placed on the base 210 abutting it against the edges 212. By rotating a wheel 230 the screw 240 is screwed into the plate 250 in one direction or the other, so that the screw 240 projects more or less from the underside of the plate 250. The variable projection of the screw 240 modifies the inclination of the corresponding side of the base 210 in relation to its support plane and, definitely, inclines the articulator 200 laterally. "Laterally" means according to the movement shown by the dotted line in Fig.6.

Figure 9 shows, for example, two screws 240 in different positions, retracted in the base 210 on the left, and extracted on the right.

## Claims

1. Assembly constituted by:
an articulator (200) and
an accessory (300) which is separate from the articulator and on whose top the articulator can be placed for being inclined laterally,
the articulator (200) comprising
- a fixed base (150) to which an oscillating support (152) is hinged along an axis (X2) adjustable in the space,
- a positioning rod (154),
- two casts of the dental arches fixed between the support (152) and the base (150),
the hinge along said axis (X2) simulating the biomechanics of the mandibular articulation,
**characterized in that**
the accessory comprises
- a flat base plate (210) on which the articulator may be placed and which is adapted for supporting the articulator in relation to a generic support plane (P),
- means (230, 240,250) for laterally adjusting the inclination of the flat base plate (210), and thereby of the overlying articulator.

2. Assembly according to claim 1, wherein said means comprise an element (240) whose projection from the flat base plate is adjustable.

3. Assembly according to claim 2, wherein said means comprise an element (230) operable to be rotated and cooperating with a linearly movable element (240) which can be shifted inside a recess (222) of the flat base plate.

4. Assembly according to claim 3, wherein the operable element comprises a wheel (230) housed in the flat base plate, the wheel being integral with a threaded element (240) which can be screwed more or less into an element (250) fixed with respect to the flat base plate.

5. Assembly according to any of the preceding claims, wherein the flat base plate comprises positioning means (212, 260) for the articulator.

6. Assembly according to claim 5, wherein said means comprise raised edges (212,260) in relation to the flat base plate.

7. Assembly according to claim 5 or 6, wherein said means comprise raised edges (260) which can be positioned in an adjustable manner in relation to the flat base plate.

8. Assembly according to claim 7, wherein one raised edge comprises a groove (270) in which a blocking element (268) is inserted adapted to fasten the raised edge to the flat base plate.

## Patentansprüche

1. System, bestehend aus:
einem Artikulator (200) und
einem Zubehör (300), das vom Artikulator getrennt ist und auf das der Artikulator gesetzt werden kann, um ihn seitlich zu neigen,
wobei der Artikulator (200) Folgendes umfasst:
- eine feste Basis (150), an der mittels eines Gelenks eine Schwenkhalterung (152) entlang einer Achse (X2) befestigt ist, die räumlich verstellbar ist;
- einen Positionierungsstab (154);
- zwei Zahnbogenmodelle, die zwischen der Halterung (152) und der Basis (150) fixiert sind;
wobei die Gelenkverbindung entlang der Achse (X2) die Biomechanik des Kiefergelenks simuliert,
**dadurch gekennzeichnet, dass**
das Zubehör Folgendes umfasst:
- eine flache Basisplatte (210), auf die der Artikulator aufgesetzt werden kann und die ausgelegt ist, um den Artikulator zu einer allgemeinen Halterungsebene (P) zu stützen,
- Mittel (230, 240, 250) zur seitlichen Regulierung der Neigung der flachen Basisplatte (210) und damit des darüber befindlichen Artikulators.

2. System nach Anspruch 1, wobei diese Mittel ein Element (240) umfassen, dessen Vorstand aus der flachen Basisplatte verstellbar ist.

3. System nach Anspruch 2, wobei diese Mittel ein Element (230) umfassen, drehbar betätigbar und kooperierend mit einem mobilen Element (240), linear und verschiebbar in einem Hohlraum (222) der flachen Basisplatte.

4. System nach Anspruch 3, wobei das betätigbare Element ein Rad (230) umfasst, das in der flachen Basisplatte untergebracht ist, wobei das Rad fest mit einem Gewindeelement (240) verbunden ist, das mehr oder minder in ein fixes Element (250) zur flachen Basisplatte eingeschraubt werden kann.

5. System nach einem der vorhergehenden geänderten Ansprüche, wobei die flache Basisplatte Mittel (212, 260) zum Positionieren des Artikulators umfasst.

6. System nach Anspruch 5, wobei diese Mittel gegenüber der flachen Basisplatte erhöhte Ränder (212, 260) umfassen.

7. System nach Anspruch 5 oder 6, wobei diese Mittel erhöhte Ränder (260) umfassen, die verstellbar zur flachen Basisplatte positioniert werden können.

8. System nach Anspruch 7, wobei ein erhöhter Rand eine Nut (270) umfasst, in die ein Festspannelement (268) eingefügt ist, das ausgelegt ist, um den erhöhten Rand an der flachen Basisplatte festzuspannen.

## Revendications

1. Ensemble constitué de :
un articulateur (200) et
un accessoire (300) séparé de l'articulateur et au-dessus duquel placer ledit articulateur pour l'incliner latéralement,
l'articulateur (200) comprenant
- une base fixe (150) sur laquelle un support oscillant (152) est monté le long d'un axe (X2) réglable dans l'espace ;
- une petite tige de positionnement (154) ;
- deux modèles des arcs dentaires fixés entre le support (152) et la base (150) ;
la charnière le long dudit axe (X2) simulant la biomécanique de l'articulation mandibulaire,
**caractérisé par le fait que**
l'accessoire comprend
une tablette plate de base (210) sur laquelle l'articulateur peut reposer et adapté de sorte à supporter l'articulateur par rapport à un plan général de support (P),
- moyens (230, 240, 250) pour régler latéralement l'inclinaison de la tablette plate de base (210), et donc celle de l'articulateur au-dessus.

2. Ensemble selon la revendication 1 dans laquelle lesdits moyens comprennent un élément (240) dont la saillie hors de la tablette plate de base est réglable.

3. Ensemble selon la revendication 2 dans laquelle lesdits moyens comprennent un élément (230) pouvant opérer en tournant et coopérant avec un élément (240) mobile dans le sens linéaire et pouvant se déplacer dans une cavité (222) de la tablette plate de base.

4. Ensemble selon la revendication 3 dans laquelle l'élément pouvant être opéré comprend une roue (230) logée dans la tablette plate de base, la roue étant solidaire avec un élément (240) fileté pouvant être vissé plus ou moins dans un élément (250) fixe par rapport à la tablette plate de base.

5. Ensemble selon un des amendements précédents et dans lequel une tablette plate de base comprend les moyens (212, 260) de positionnement pour l'articulateur.

6. Ensemble selon la revendication 5 dans laquelle lesdits moyens comprennent des bords relevés (212, 260) par rapport à la tablette plate de base.

7. Ensemble selon la revendication 5 ou 6 dans laquelle lesdits moyens comprennent des bords relevés (260) pouvant être placés de façon réglable par rapport à la tablette plate de base.

8. Ensemble selon la revendication 7 dans laquelle un bord relevé comprend une rainure (270) où s'insère un élément de blocage (268) convenant pour fixer le bord relevé à la tablette plate de base.
